# EUROPÄISCHE PATENTSCHRIFT

(11) **EP 2 230 536 B1**
(45) Veröffentlichungstag und Bekanntmachung des Hinweises auf die Patenterteilung: **11.06.2014**
(21) Anmeldenummer: 09003906.6
(22) Anmeldetag: 18.03.2009
(51) Int. Cl.: G01V 8/10

(54) **Optischer Sensor**
Optical sensor
Capteur optique

(43) Veröffentlichungstag der Anmeldung: 22.09.2010
(73) Patentinhaber: Pepperl + Fuchs GmbH, 68307 Mannheim (DE)
(72) Erfinder: Günther, Uwe, 13129 Berlin (DE); Eggeling, Markus, 13353 Berlin (DE)
(74) Vertreter: Schiffer, Axel Martin

(56) Entgegenhaltungen:
- EP-A- 1 249 571
- FR-A- 2 429 442
- US-A- 3 443 458

## Beschreibung

Die vorliegende Erfindung betrifft einen optischen Sensor zum Überwachen eines Überwachungsbereichs nach dem Oberbegriff des Anspruchs 1.

Optische Sensoren dieser Art, die insbesondere zum sicherheitsmäßigen Überwachen eines Öffnungsbereichs einer Tür verwendet werden (siehe z. B. EP 249 571 A2), sind grundsätzlich bekannt und weisen folgende Komponenten auf: eine Montageeinrichtung zum Montieren des Sensors an einem Einsatzort, ein Sensormodul, welches an der Montageeinrichtung um eine Achse verschwenkbar angeordnet ist, und eine manuell drehbare Stelleinrichtung zum Einstellen einer Winkeleinstellung des Sensormoduls.

Bei einem typischen Ablauf wird solch ein optischer Sensor mit seiner Montageeinrichtung beispielsweise an einem Türblatt im oberen Bereich befestigt. Sodann wird ein Sensormodul mit seinem Erfassungsbereich geeignet ausgerichtet. Hierbei sind üblicherweise Vorschriften zu berücksichtigen, in denen im Einzelnen festgelegt ist, welche räumlichen Bereiche vor dem sich bewegenden Türblatt zu überwachen sind. Solche Sensoren werden auch als mitfahrende Türüberwachungssensoren bezeichnet.

Das Sensormodul beinhaltet typischerweise mindestens einen Lichttaster, mindestens einen Triangulationstaster und/oder ein Lichtgitter.

Bei bekannten optischen Sensoren dieser Art wird das Sensormodul mit Hilfe einer manuell drehbaren Stelleinrichtung geeignet verdreht, bis die gewünschte Schwenkposition erreicht ist, das heißt bis das Sensormodul mit seinem Erfassungsbereich im Hinblick auf das Türblatt geeignet ausgerichtet ist. Um eine Fixierung einer gewählten Drehposition zu gewährleisten, kann bei einer im Stand der Technik bekannten Lösung die Winkelposition des Sensormoduls in gewissen Raststufen eingestellt werden. Da diese Rastung nur vergleichsweise grob ist, kann auch die Schwenkposition des Sensormoduls nur relativ ungenau eingestellt werden.

Bei weiteren im Stand der Technik bekannten Lösungen sind zur Fixierung einer Winkelposition des Sensormoduls jeweils Werkzeuge notwendig. Beispielsweise kann durch einen Schraubendreher ein Klemmmechanismus verriegelt oder gelöst werden. Bei einer weiteren bekannten Lösung erfolgt die Verschwenkung des Sensormoduls über Stellschrauben.

Bei bisher bekannten optischen Sensoren der genannten Art ist deshalb keine stufenlose Einstellung möglich und/oder zum Fixieren, Lösen oder Verändern der Winkeleinstellung des Sensormoduls ist ein Werkzeug notwendig.

Als eine **Aufgabe** der vorliegenden Erfindung kann angesehen werden, einen optischen Sensor zu schaffen, bei dem mit einfachen technischen Mitteln die Positionierung oder Winkeleinstellung des Sensormoduls präzise angepasst werden kann, ohne dass hierfür Werkzeuge oder Hilfsmittel notwendig sind.

Diese Aufgabe wird durch den optischen Sensor mit den Merkmalen des Anspruchs 1 gelöst.

Vorteilhafte Ausgestaltungen des erfindungsgemäßen optischen Sensors werden im Folgenden, insbesondere mit Bezug auf die abhängigen Ansprüche und die Figuren, beschrieben.

Der optische Sensor der oben genannten Art ist erfindungsgemäß dadurch weitergebildet, dass zum untersetzten Übertragen einer Drehung der Stelleinrichtung auf eine Verschwenkung des Sensormoduls an der Stelleinrichtung oder dem Sensormodul eine spiralförmige Führungsbahn und an der jeweils anderen Komponente ein Führungselement gebildet ist und dass das Führungselement beim Drehen der Stelleinrichtung in der spiralförmigen Führungsbahn geführt wird.

Als ein Kerngedanke der Erfindung kann angesehen werden, das Sensormodul nicht mehr, wie im Stand der Technik, direkt mit einer Drehung der Stelleinrichtung mitzuführen, sondern eine Drehung der Stelleinrichtung untersetzt auf eine Verschwenkung des Sensormoduls zu übertragen. Dies führt dazu, dass bei Verdrehung der Stelleinrichtung um einen bestimmten Winkel das Sensormodul nur um einen viel kleineren, nämlich um den Untersetzungsfaktor reduzierten Winkel, verschwenkt wird. Dadurch wird als wesentlicher Vorteil der Erfindung erreicht, dass eine deutlich genauere Einstellung der Winkelposition des Sensormoduls möglich ist.

Ein weiterer Kerngedanke der Erfindung kann darin gesehen werden, dass die untersetzte Übertragung der Drehbewegung der Stelleinrichtung auf die Winkelverstellung des Sensormoduls bewerkstelligt wird durch eine schnecken- oder spiralförmige Führungsbahn, welche mit einem Führungselement zusammenwirkt. Dabei ist die spiralförmige Führungsbahn an der Stelleinrichtung oder dem Sensormodul und das Führungselement an der jeweils anderen Komponente gebildet. Beim manuellen Drehen der Stelleinrichtung wird sodann das Führungselement in der spiralförmigen Führungsbahn geführt.

Prinzipiell werden die Vorteile der Erfindung auch erreicht, wenn die Stelleinrichtung mit Hilfe eines Werkzeugs, beispielsweise eines Schraubendrehers, manuell verstellt wird. Bei bevorzugten Ausgestaltungen der Erfindung ist die Stelleinrichtung aber ohne Werkzeug von Hand drehbar.

Ein weiterer wesentlicher Vorteil des erfindungsgemäßen optischen Sensors kann darin gesehen werden, dass der mechanische Aufbau selbsthemmend gebildet ist. Das bedeutet, dass bei Einwirken von Kräften in einer Verschwenkrichtung des Sensormoduls diese Kräfte durch das Zusammenwirken des Führungselements mit der Führungsbahn abgestützt werden, da die fraglichen Kräfte im Wesentlichen senkrecht auf einer Erstreckungsrichtung der spiralförmigen Führungsbahn stehen.

Schließlich kann ein wesentlicher Vorteil der Erfindung darin gesehen werden, dass die Winkeleinstellung des Sensormoduls und damit des optischen Sensors insgesamt stufenlos erfolgen kann.

Bei einer besonders bevorzugten und einfachen Ausgestaltung des optischen Sensors ist die Stelleinrichtung als Stellrad gebildet, welches insbesondere werkzeuglos manuell drehbar sein kann.

Im Hinblick auf die Führungsbahn sind prinzipiell Ausgestaltungen möglich, bei denen die Führungsbahn vorstehend ausgebildet ist und das Führungselement diese vorstehende Führungsbahn umgreift oder umfasst. Es kommt hierbei prinzipiell nur darauf an, dass das Führungselement erfindungsgemäß beim Drehen der Stelleinrichtung von der Führungsbahn geführt wird.

Bei bevorzugten Ausgestaltungen des erfindungsgemäßen Sensors ist aber das Führungselement vorstehend gebildet und greift in die Führungsbahn ein. Das bedeutet, dass die Führungsbahn als Ausnehmung oder Vertiefung gebildet ist.

Beispielsweise kann das Führungselement als Führungszapfen und die Führungsbahn als dazu passende Führungsnut gebildet sein.

Prinzipiell kommt es für die oben beschriebene Grundidee der Erfindung nicht darauf an, an welcher der Komponenten-Stelleinrichtung oder Sensormodul das Führungselement und an welcher Komponente die Führungsbahn gebildet ist. Bei bevorzugten Ausführungsbeispielen des erfindungsgemäßen Sensors ist jedoch die Führungsnut an dem Stellrad gebildet und/oder der Führungszapfen ist an einer Stirnseite des Sensormoduls gebildet.

Grundsätzlich kann die Führungsnut lediglich als Vertiefung in der Stelleinrichtung oder dem Sensormodul gebildet sein. Besonders bevorzugt ist die Führungsnut jedoch als Durchbrechung in dem Stellrad gebildet. Dadurch wird der Vorteil erreicht, dass es auf den axialen Abstand des Stellrads bezüglich des Sensormoduls nicht präzise ankommt.

Bei der spiralförmigen Führungsbahn kommt es im Grundsatz nur darauf an, dass der radiale Abstand der Bahn vom Drehpunkt, der zweckmäßig auf der Drehachse der Stelleinrichtung liegt, mit dem Drehwinkel größer wird. Bei einer bevorzugten Ausgestaltung der Erfindung weist die spiralförmige Führungsbahn die Form einer archimedischen Spirale auf. Das bedeutet, dass der Abstand der Bahn vom Drehpunkt linear mit dem Drehwinkel anwächst.

Bedeutsam für die Erfindung ist, dass es sich bei der Führungsbahn um eine spiralförmige Bahn und nicht um eine Schraubenbahn handelt.

Um eine manuelle Bedienbarkeit des Stellrads zu erleichtern, ist an einer Außenseite des Stellrads bevorzugt eine Profilierung gebildet.

Zwar ist durch die erfindungsgemäße Anordnung des Führungselements relativ zu der Führungsbahn bereits eine selbsthemmende Einstellung der Verschwenkposition des Sensormoduls in der oben beschriebenen Weise möglich. Die Fixierung der einmal gewählten Einstellung des Sensormoduls wird noch verbessert, wenn zum Einrasten in die Profilierung eine Rasteinrichtung vorhanden ist. Hierbei kann es sich um eine, insbesondere federnde, Rastnase, handeln, welche in die Profilierung eingreift.

Der oben beschriebene Vorteil einer prinzipiell stufenlosen Einstellung der Verschwenkposition des Sensormoduls wird hierdurch nicht konterkariert, da das Winkelraster des Stellrads wegen der erfindungsgemäß erzielten Untersetzung der Drehbewegung des Stellrads auf die Verschwenkung des Sensormoduls einem wesentlichen dichteren Winkelraster des Sensormoduls entspricht.

Prinzipiell kann die Untersetzung vergrößert werden, indem die Zahl der Spiralgänge der Führungsbahn vergrößert wird. Bei praktischen Ausführungsbeispielen hat sich gezeigt, dass bereits mit einer spiralförmigen Führungsbahn, welche im Wesentlichen nur eine Umdrehung beschreibt, hinreichende Untersetzungen erzielt werden.

Grundsätzlich sind aber auch Beispiele mit einer größeren Zahl von Spiralgängen der Führungsbahn denkbar. Hierbei kann beispielsweise der Führungszapfen wegen der grundsätzlich beschränkten Platzverhältnisse etwas dünner ausgebildet werden. Dies kann beispielsweise dadurch geschehen, dass der Führungszapfen ein an dem Stellrad oder dem Sensormodul angeordneter oder befestigter Metallstift ist.

Bei einer einfach aufgebauten Variante des erfindungsgemäßen optischen Sensors ist die Montageeinrichtung ein Montageprofil, beispielsweise aus einem Aluminiumstranggussprofil, mit zwei Schenkelbereichen. In diesem Profil können bevorzugt geeignete Profilierungen gebildet sein, welche ein seitliches Einschieben der Komponenten, insbesondere des Sensormoduls, des Stellrads und/oder weiterer Bestandteile, gestatten.

Das Stellrad kann grundsätzlich in beliebiger Weise in dem Montageprofil befestigt werden. Bei einer bevorzugten Ausgestaltung ist das Stellrad an einer Stirnseite eines in dem Montageprofil aufgenommenen Gehäuses montiert. In diesem Gehäuse kann insbesondere eine Sensorelektronik untergebracht sein. Zusätzliche Komponenten sind dann zur Montage des Stellrads nicht erforderlich.

An den Enden der Schenkelbereiche können zweckmäßig Profilierungen gebildet sein zum Einschieben einer Frontscheibe. Das Sensorinnere ist dann vor Verschmutzungen und/oder mechanischen Beschädigungen geschützt.

Prinzipiell kann die Sensorelektronik aber auch in dem Gehäuse des Sensormoduls selbst untergebracht sein. Für diese Variante ist dann zweckmäßig ein in das Montageprofil einschiebbarer Montageblock vorhanden, an dem das Stellrad drehbar gelagert ist und an dem das Sensormodul schwenkbar gelagert ist.

Der Führungszapfen kann grundsätzlich ein separates Bauteil sein, welcher mit dem Stellrad oder der Sensoreinheit verbunden wird. Bei einer bevorzugten Variante des erfindungsgemäßen optischen Sensors ist jedoch der Führungszapfen einstückig mit einem Gehäuse des Sensormoduls gebildet. Insbesondere können das Stellrad und/oder das Gehäuse des Sensormoduls mit dem Führungszapfen als Kunststoffformteile gebildet sein.

Weitere Vorteile und Merkmale der vorliegenden Erfindung werden nachstehend mit Bezug auf die beigefügte Figuren beschrieben. Hierin zeigt:
- Fig. 1:: eine schematische Darstellung eines erfindungsgemäßen optischen Sensors mit abgezogener Frontscheibe;
- Fig. 2:: eine Schnittansicht des in Fig. 1 gezeigten Ausführungsbeispiels mit eingesetzter Frontscheibe, wobei sich das Sensormodul in einer ersten Schwenkposition befindet; und
- Fig. 3:: eine Schnittansicht des in Fig. 1 gezeigten Ausführungsbeispiels mit eingesetzter Frontscheibe, wobei sich das Sensormodul in einer zweiten Schwenkposition befindet.

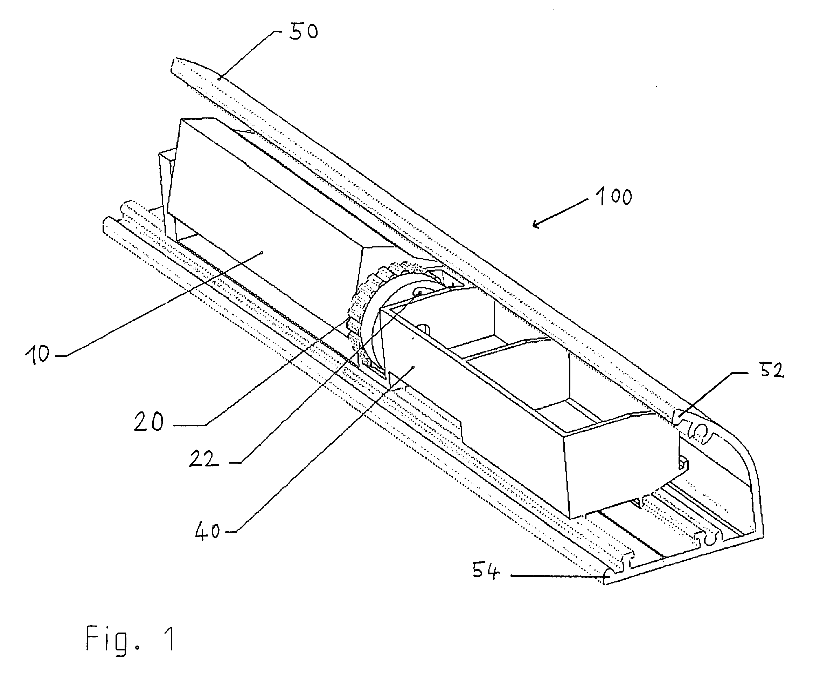

Ein Ausführungsbeispiel eines erfindungsgemäßen optischen Sensors 100 wird mit Bezug auf die Figuren 1 bis 3 im Einzelnen erläutert. In sämtlichen Figuren sind äquivalente Komponenten mit denselben Bezugszeichen versehen.

Das in Fig. 1 gezeigte Ausführungsbeispiel eines erfindungsgemäßen optischen Sensors 100 weist als wesentliche Bestandteile ein Montageprofil 50, ein Sensormodul 10 und ein Stellrad 20 auf. Im gezeigten Beispiel ist außerdem eine Gehäuse 40 vorhanden, in welchem Teile der Sensorelektronik untergebracht sind.

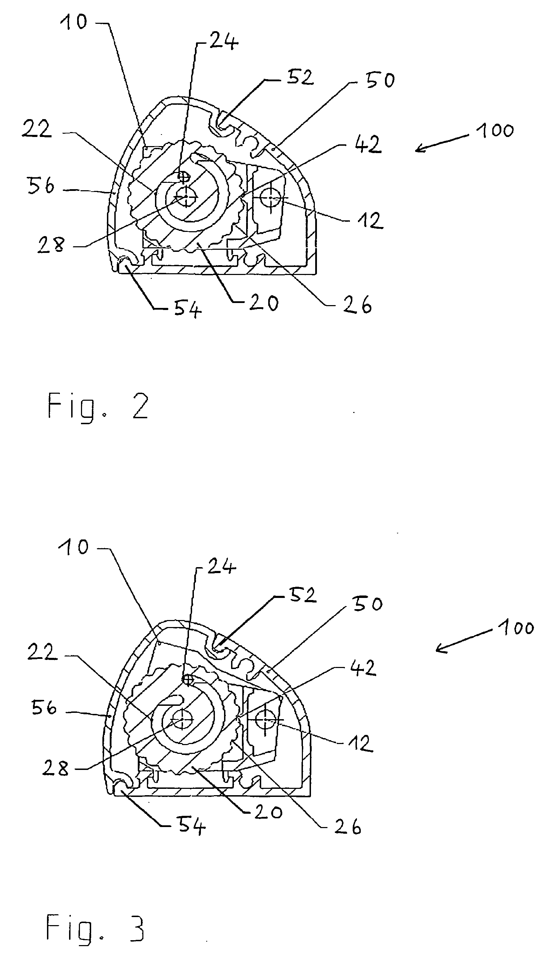

Das Montageprofil 50 weist im Wesentlichen zwei Schenkel auf, wobei die Sensorbestandteile in dem in den Figuren 2 und 3 jeweils unten liegenden Schenkel in dort geeignet gebildeten Profilierungen aufgenommen sind. An Endbereichen der Schenkel sind außerdem Profilierungen 52, 54 gebildet, welche zum Einschieben einer Frontscheibe 56, wie in den Figuren 2 und 3 gezeigt, dienen.

Aus den Figuren 2 und 3 ist darüber hinaus ersichtlich, dass das Sensormodul 10 um eine Achse 12 schwenkbar gelagert ist und dass das Stellrad 20 um eine Achse 28 drehbar angeordnet ist. In dem Stellrad 20 ist erfindungsgemäß eine spiralförmige Führungsbahn 22 vorhanden, welche im gezeigten Beispiel als Durchbrechung des Stellrads 20 gebildet ist. Entsprechend ist erfindungsgemäß an dem Sensormodul 10, genauer gesagt an einem Gehäuse des Sensormoduls 10, ein Führungszapfen 24 als Führungselement gebildet, der, wie aus den Figuren 2 und 3 ersichtlich, in die spiralförmige Führungsbahn 22 eingreift und beim Drehen des Stellrads 20 von der spiralförmigen Führungsbahn 22 geführt wird. An dem Stellrad 20 ist außerdem umlaufend eine Profilierung 26 vorgesehen, in welche eine relativ zu dem Montageprofil 50 ortsfest positionierte Rastnase 42 eingreift.

Im gezeigten Ausführungsbeispiel ist das Stellrad 20 an dem Gehäuse 40, welches ebenfalls in dem Montageprofil 50 fixiert ist, drehbar gelagert. Die spiralförmige Führungsbahn 24, die in dem Stellrad gebildet ist, kann auch als Nut bezeichnet werden, welche sich in einer Schneckenform um den Drehpunkt 28 des Stellrads 20 nach außen bewegt.

Durch eine Drehung des Stellrads 20, was insbesondere manuell und ohne Werkzeug erfolgen kann, werden der Führungszapfen 24 und damit das Sensormodul 10, welches auch als Optikteil bezeichnet werden kann, bewegt.

Der Grad der Untersetzung ist aus einem Vergleich der Figuren 2 und 3 erkennbar. Während das Stellrad von Fig. 2 zu Fig. 3 praktisch eine volle Umdrehung durchlaufen hat, wird das Sensormodul 10 dabei nur einen Winkel von etwa 15° verschwenkt.

Das Sensormodul 10 kann so durch Drehung des Stellrads 20 um den entsprechend untersetzten Winkel gehoben oder gesenkt werden. Durch die spezielle Ausführung des Führungszapfens 24 in der passgenau gefertigten Führungsbahn 22 in dem Stellrad 20 wird der Tubus, also das Sensormodul 10, spielfrei und selbsthemmend gehalten. Durch die optional vorzusehende Rastnase 42, welche in die äußere Kontur 26 des Stellrads 20 eingreift, kann die Verstellung auch in einem Raster oder rastend erfolgen. Entsprechend der Untersetzung der Drehbewegung auf die Verschwenkung des Sensormoduls 10 wird in der entsprechenden Teilung der Rastung des Außenprofils 26 auch die Winkelverstellung des Sensormoduls 10 nachgeführt.

Mit der vorliegenden Erfindung wird ein neuartiger optischer Sensor bereitgestellt, bei dem eine präzise Winkeleinstellung eines Sensormoduls prinzipiell ohne Werkzeug möglich ist.

## Patentansprüche

1. Optischer Sensor zum Überwachen eines Überwachungsbereichs, insbesondere eines Öffnungsbereichs einer Tür,
mit einer Montageeinrichtung (50) zum Montieren des Sensors (100) an einem Einsatzort, insbesondere an einem Türblatt,
mit einem Sensormodul (10), welches an der Montageeinrichtung (50) um eine Achse (12) verschwenkbar angeordnet ist, und
mit einer manuell drehbaren Stelleinrichtung (20) zum Einstellen einer Winkeleinstellung des Sensormoduls (10) bezüglich der Montageeinrichtung (50),
**dadurch gekennzeichnet,**
**dass** zum untersetzten Übertragen einer Drehung der Stelleinrichtung (20) auf eine Verschwenkung des Sensormoduls (10) an der Stelleinrichtung (20) oder dem Sensormodul (10) eine spiralförmige Führungsbahn (22) und an der jeweils anderen Komponente ein Führungselement (24) gebildet ist und
**dass** das Führungselement (24) beim Drehen der Stelleinrichtung (20) in der spiralförmigen Führungsbahn (22) geführt wird.

2. Sensor nach Anspruch 1,
**dadurch gekennzeichnet,**
**dass** die Stelleinrichtung ein Stellrad (20) ist.

3. Sensor nach Anspruch 1 oder 2,
**dadurch gekennzeichnet,**
**dass** das Führungselement (24) vorstehend gebildet ist und in die Führungsbahn (22) eingreift.

4. Sensor nach Anspruch 3,
**dadurch gekennzeichnet,**
**dass** das Führungselement als Führungszapfen (24) gebildet ist und dass die Führungsbahn als Führungsnut (22) gebildet ist.

5. Sensor nach Anspruch 4,
**dadurch gekennzeichnet,**
**dass** die Führungsnut (22) in dem Stellrad (20) gebildet ist und
**dass** der Führungszapfen (24) an einer Stirnseite des Sensormoduls (10) gebildet ist.

6. Sensor nach einem der Ansprüche 1 bis 5,
**dadurch gekennzeichnet,**
**dass** die spiralförmige Führungsbahn (22) die Form einer archimedischen Spirale aufweist.

7. Sensor nach einem der Ansprüche 2 bis 6,
**dadurch gekennzeichnet,**
**dass** an einer Außenseite des Stellrads (20) eine Profilierung (26) gebildet ist.

8. Sensor nach Anspruch 7,
**dadurch gekennzeichnet,**
**dass** zum Einrasten in die Profilierung (26) eine Rasteinrichtung (42) vorhanden ist.

9. Sensor nach Anspruch 8,
**dadurch gekennzeichnet,**
**dass** als Rasteinrichtung eine, insbesondere federnde, Rastnase (42) vorhanden ist.

10. Sensor nach einem der Ansprüche 1 bis 9,
**dadurch gekennzeichnet,**
**dass** die Montageeinrichtung ein Montageprofil (50) mit zwei Schenkelbereichen ist.

11. Sensor nach Anspruch 10,
**dadurch gekennzeichnet,**
**dass** das Stellrad (20) an einer Stirnseite eines in dem Montageprofil (50) aufgenommenen Gehäuses (40) montiert ist.

12. Sensor nach Anspruch 10 oder 11,
**dadurch gekennzeichnet,**
**dass** an Enden der Schenkelbereiche Profilierungen (52, 54) zum Einschieben einer Frontscheibe (56) gebildet sind.

13. Sensor nach einem der Ansprüche 4 bis 12,
**dadurch gekennzeichnet,**
**dass** der Führungszapfen (24) einstückig mit einem Gehäuse des Sensormoduls (10) gebildet ist.

14. Sensor nach einem der Ansprüche 4 bis 13,
**dadurch gekennzeichnet,**
**dass** der Führungszapfen (24) ein an dem Stellrad (20) oder dem Sensormodul (10) angeordneter Metallstift ist.

15. Sensor nach einem der Ansprüche 2 bis 14,
**dadurch gekennzeichnet,**
**dass** ein in das Montageprofil (50) einschiebbarer Montageblock vorhanden ist, an dem das Stellrad (20) drehbar gelagert ist und an dem das Sensormodul (10) schwenkbar gelagert ist.

## Claims

1. An optical sensor for monitoring a monitored region, more particularly for monitoring an opening zone of a door,
comprising a mounting means (50) for mounting the sensor (100) at a site of operation, more particularly for mounting the sensor (100) on a door leaf, comprising a sensor module (10), which is disposed on the mounting means (50) for rotation about an axis (12), and
comprising a manually rotatable positioning device (20) for adjusting an angular position of the sensor module (10) in relation to said mounting means (50),
**characterized in that**
for the purpose of achieving a geared-down transfer of a rotation of the positioning device (20) in response to rotation of the sensor module (10) on the positioning device (20) or on the sensor module (10), there is designed a helical guide way (22) and, on the respective other component, a guide element (24), and
that when the positioning device (20) is rotated, the guide element (24) is guided in the helical guide way (22).

2. The sensor as defined in claim 1,
**characterized in that**
said positioning device is an adjusting wheel (20).

3. The sensor as defined in claim 1 or claim 2,
**characterized in that**
said guide element (24) is protudingly designed and engages in the guide way (22).

4. The sensor as defined in claim 3,
**characterized in that**
said guide element is designed as a pilot pin (24) and that said guide way is designed as a guide groove (22).

5. The sensor as defined in claim 4,
**characterized in that**
said guide groove (22) is formed in said adjusting wheel (20) and that said pilot pin (24) is formed on a face of said sensor module (10).

6. The sensor as defined in any one of claims 1 to 5,
**characterized in that**
said helical guide way (22) has the shape of an archimedian spiral.

7. The sensor as defined in any one of claims 2 to 6,
**characterized in that**
a profile (26) is formed on an external surface of the adjusting wheel (20).

8. The sensor as defined in claim 7,
**characterized in that**
a detent (42) is provided for engagement in said profile (26).

9. The sensor as defined in claim 8,
**characterized in that**
said detent is a snap lug (42), more particularly a resilient snap lug (42).

10. The sensor as defined in any one of claims 1 to 9,
**characterized in that**
said mounting means is a mounting profile (50) comprising two limb regions.

11. The sensor as defined in claim 10,
**characterized in that**
said adjusting wheel (20) is mounted on an end face of a housing (40) present in the mounting profile (50).

12. The sensor as defined in claim 10 or claim 11,
**characterized in that**
profiles (52 , 54) for the insertion of a front pane (56) are formed at the ends of the limb regions.

13. The sensor as defined in any one of claims 4 to 12,
**characterized in that**
said pilot pin (24) is integrally designed with a housing of said sensor module (10).

14. The sensor as defined in any one of claims 4 to 13,
**characterized in that**
said pilot pin (24) is a metal pin disposed on said adjusting wheel (20) or on said sensor module (10).

15. The sensor as defined in any one of claims 2 to 14,
**characterized in that**
an assembled block capable of being inserted into the mounting profile (50) is present, on which said adjusting wheel (20) is rotatably mounted and on which said sensor module (10) is rotatably mounted.

## Revendications

1. Capteur optique pour la surveillance d'une zone de surveillance, en particulier d'une zone d'ouverture d'une porte,
avec un dispositif de montage (50) pour le montage du capteur (100) sur un site d'utilisation, en particulier sur un battant de porte,
avec un module de détection (10), qui est disposé sur le dispositif de montage (50) en étant apte à pivoter autour d'un axe (12), et
avec un dispositif de réglage (20) apte à pivoter manuellement pour le réglage d'un positionnement angulaire du module de détection (10) par rapport au dispositif de montage (50),
**caractérisé :**
**en ce que**, pour la transmission, avec réduction, d'une rotation du dispositif de réglage (20) lors d'un pivotement du module de détection (10), il est prévu, sur le dispositif de réglage (20) ou sur le module de détection (10), un chemin de guidage en forme de spirale (22) et, respectivement sur l'autre pièce, un élément de guidage (24), et
**en ce que**, lors de la rotation du dispositif de réglage (20), l'élément de guidage (24) est guidé dans le chemin de guidage en forme de spirale (22).

2. Capteur selon la revendication 1,
**caractérisé :**
**en ce que** le dispositif de réglage est une roue de réglage (20).

3. Capteur selon la revendication 1 ou 2,
**caractérisé :**
**en ce que** l'élément de guidage (24) est de la forme d'une pièce en saillie et s'engage dans le chemin de guidage (22).

4. Capteur selon la revendication 3,
**caractérisé :**
**en ce que** l'élément de guidage est de la forme d'une goupille de guidage (24), et
**en ce que** le chemin de guidage est de la forme d'une rainure de guidage (22).

5. Capteur selon la revendication 4,
**caractérisé :**
**en ce que** la rainure de guidage (22) est formée dans la roue de réglage (20), et
**en ce que** la goupille de guidage (24) est formée sur une face frontale du module de détection (10).

6. Capteur selon une des revendications 1 à 5,
**caractérisé :**
**en ce que** le chemin de guidage en forme de spirale (22) présente la forme d'une spirale d'Archimède.

7. Capteur selon une des revendications 2 à 6,
**caractérisé :**
**en ce qu'**un profilé (26) est constitué sur un bord extérieur de la roue de réglage (20).

8. Capteur selon la revendication 7,
**caractérisé :**
**en ce qu'**un dispositif à crans (42) est présent pour un encliquetage dans le profilé (26).

9. Capteur selon la revendication 8,
**caractérisé :**
**en ce que**, en tant que dispositif à crans, un ergot d'encliquetage (42) est présent, en particulier de type élastique.

10. Capteur selon une des revendications 1 à 9,
**caractérisé :**
**en ce que** le dispositif de montage est un profilé de montage (50) avec deux zones d'attache.

11. Capteur selon la revendication 10,
**caractérisé :**
**en ce que** la roue de réglage (20) est montée sur une face frontale d'un boîtier (40) incorporé au profilé de montage (50).

12. Capteur selon la revendication 10 ou 11,
**caractérisé :**
**en ce qu'**aux extrémités des zones d'attache, des profilés (52, 54) sont formés pour l'insertion d'un panneau frontal (56).

13. Capteur selon une des revendications 4 à 12,
**caractérisé :**
**en ce que** la goupille de guidage (24) est formée d'une seule pièce avec un boîtier du module de détection (10).

14. Capteur selon une des revendications 4 à 13,
**caractérisé :**
**en ce que** la goupille de guidage (24) est une tige métallique disposée sur la roue de réglage (20) ou sur le module de détection (10).

15. Capteur selon une des revendications 2 à 14,
**caractérisé :**
**en ce qu'**un bloc de montage pouvant être inséré dans le profilé de montage (50) est présent, sur lequel la roue de réglage (20) est disposée en étant apte à tourner et sur lequel le module de détection (10) est disposé en étant apte à pivoter.
